# EUROPEAN PATENT APPLICATION

(11) **EP 4 848 633 A1**
(43) Date of publication of application: **02.12.2026**
(21) Application number: 25751643.5
(22) Date of filing: 07.02.2025
(51) Int. Cl.: H04L 1/1607

(54) **FEEDBACK METHOD AND COMMUNICATION APPARATUS**

(30) Priority: 08.02.2024 CN 202410179376
(71) Applicant: Huawei Technologies Co., Ltd., Shenzhen, Guangdong 518129 (CN)
(72) Inventor: DONG, Pengpeng, Shenzhen, Guangdong 518129 (CN); LI, Hang, Shenzhen, Guangdong 518129 (CN); ZHENG, Chen, Shenzhen, Guangdong 518129 (CN)
(74) Representative: Pfenning, Meinig & Partner mbB
(86) International application number: PCT/CN2025/076170
(87) International publication number: WO 2025/168044

(57) **Abstract**

This application provides a feedback method and a communication apparatus, applicable to a coding scheme including two or more component codes. A CB generated through encoding includes encoded bits of different component codes, which correspond to different decoding capabilities at a receiving end. Accordingly, the receiving end may feed back a CB/CBG decoding status at a component code granularity. When retransmitting an encoded bit that is incorrectly decoded, a transmitting end may retransmit only the component code that is incorrectly decoded, thereby improving spectral utilization efficiency.

## Description

This application claims priority to Chinese Patent Application No. 202410179376.7, filed with the China National Intellectual Property Administration on February 8, 2024 and entitled "FEEDBACK METHOD AND COMMUNICATION APPARATUS", which is incorporated herein by reference in its entirety.

### TECHNICAL FIELD

This application relates to the channel coding field, and more specifically, to a feedback method and a communication apparatus.

### BACKGROUND

In a 5th generation (5th generation, 5G) system, data transmission rates may reach the order of gigabits per second (gigabits per second, Gbps), and a transport block (transport block, TB) may contain hundreds of code blocks (code blocks, CBs). If hybrid automatic repeat request (hybrid automatic repeat request, HARQ) feedback is performed based on at the TB level, once the TB is incorrectly decoded, the entire TB must be retransmitted. In practice, however, only a small quantity of CBs in the TB may be incorrectly decoded. When the TB is extremely large, retransmitting the entire TB results in low resource utilization and significant resource waste. To address this, 5G introduces a compromise manner, that is, feedback and retransmission based on a code block group (code block group, CBG). Specifically, a plurality of CBs are grouped into a CBG, and feedback is provided at the CBG level. During retransmission, only erroneous CBGs are retransmitted. Compared with retransmitting the entire TB, CBG-based retransmission reduces resource consumption.

In 5G systems, a TB can be divided into a maximum of eight CBGs. However, in future systems such as 6th generation (6th generation, 6G) systems, which have higher service rate requirements, feedback at the CBG level and retransmission at CBG granularity still lead to relatively low spectral efficiency.

### SUMMARY

This application provides a feedback method and a communication apparatus to improve spectral efficiency.

According to a first aspect, a feedback method is provided. The method may be performed by a first communication device, a component (for example, a processor, a chip, a chip system, or a hardware circuit) in the first communication device, a logical module or software that can implement all or some functions of the first communication device, or the like. The method includes: sending a first signal, where the first signal is carried in a first CB; and receiving first information, where the first information indicates whether at least one group of encoded bits corresponding to the first CB is correctly decoded separately.

According to a second aspect, a feedback method is provided. The method may be performed by a second communication device, a component (for example, a processor, a chip, a chip system, or a hardware circuit) in the second communication device, a logical module or software that can implement all or some functions of the second communication device, or the like. The method includes: receiving a first signal, where the first signal is carried in a first CB; and sending first information, where the first information indicates whether at least one group of encoded bits corresponding to the first CB is correctly decoded separately.

In the technical solution of the first aspect or the second aspect, a receiving device decodes a CB from a sending device, and feeds back whether at least one group of encoded bits corresponding to the CB is correctly decoded. In this way, the sending device may retransmit an encoded bit included in an encoded bit group that is incorrectly decoded in the CB. In comparison with retransmission of one CBG, a retransmission granularity is smaller, thereby improving spectral efficiency.

The technology of this application may be applied to, for example, high-throughput and low-latency services such as an extended reality (extended reality, XR) service and an immersive video service, to improve the spectral efficiency.

In some implementations of the first aspect or the second aspect, the at least one group of encoded bits is K groups of encoded bits, the first information includes P bits, the P bits indicate whether the K groups of encoded bits are correctly decoded separately, Q bits that are in the P bits and indicate whether a first group of encoded bits is correctly decoded are determined based on a decoding result of the first group of encoded bits, Q is less than P, Q is a positive integer greater than or equal to 1, K is a positive integer greater than 1, and P is a positive integer.

In this implementation, the first information may include several bits (for example, P bits), and the several bits are used to feed back whether each of the K groups of encoded bits is correctly decoded, so that a feedback granularity can be reduced, and further a retransmission granularity can be reduced.

In some implementations of the first aspect or the second aspect, P=K, and each of the K bits indicates whether one of the K groups of encoded bits is correctly decoded.

In this implementation, the first information includes K bits, and each bit indicates whether one of the K groups of encoded bits is correctly decoded.

In some implementations of the first aspect or the second aspect, the K groups of encoded bits are in one-to-one correspondence with K component codes, each of the K groups of encoded bits is obtained based on a corresponding component code, the K component codes are in one-to-one correspondence with K layers of a hierarchical modulation constellation diagram, and any two of the K component codes differ in one or more of the following parameters: a code pattern, a code rate, or a corresponding constellation point location in the hierarchical modulation constellation diagram.

In this implementation, the K groups of encoded bits may correspond to K component codes during hierarchical coding and modulation. The receiving device feeds back a decoding status of each component code, so that the sending device retransmits only a component code that is incorrectly decoded. In this way, a retransmission granularity is smaller, thereby improving the spectral efficiency.

In some implementations of the first aspect or the second aspect, the K groups of encoded bits are in one-to-one correspondence with K local codes of a globally coupled code, the globally coupled code further includes a global code, the global code is an outer code, and the K local codes are inner codes.

In this implementation, the technical solution of this application is applied to the globally coupled code, to reduce a retransmission granularity of the globally coupled code and improve the spectral efficiency.

In some implementations of the first aspect or the second aspect, the K groups of encoded bits are in one-to-one correspondence with K steps in an encoding window of a spatially coupled code, an i^{th} group of encoded bits in the K groups of encoded bits is obtained based on at least one component code corresponding to an i^{th} step in the K steps, the Q bits correspond to a first index, and the Q bits indicate whether the first group of encoded bits corresponding to a first step indicated by the first index is correctly decoded.

In this implementation, the technical solution of this application is applied to the spatially coupled code, to reduce a retransmission granularity of the spatially coupled code. Specifically, one group of encoded bits corresponding to one step in the encoding window may be used as a retransmission granularity, to improve the spectral efficiency.

In some implementations of the first aspect or the second aspect, the first group of encoded bits corresponds to r component codes, and that the Q bits indicate whether the first group of encoded bits corresponding to the first step indicated by the first index is correctly decoded includes: q bits in the Q bits indicate whether the r component codes are correctly decoded separately, where Q is greater than or equal to q, r is greater than or equal to 1, and both q and r are positive integers.

In some implementations of the first aspect or the second aspect, the at least one group of encoded bits includes encoded bits of at least one row in *n*₁ rows and encoded bits of at least one column in *n*₂ columns of a product code having a length of *n*₁ × *n*₂, the first information includes a first indication part and a second indication part, the first indication part indicates whether the encoded bits of the at least one row in the *n*₁ rows are correctly decoded, and the second indication part indicates whether the encoded bits of the at least one column in the *n*₂ columns are correctly decoded;
the at least one group of encoded bits includes encoded bits of *n*₁ rows of a product code having a length of *n*₁ × *n*₂, and the first information indicates whether the encoded bits of the *n*₁ rows are correctly decoded;
   or
the at least one group of encoded bits includes encoded bits of *n*₂ columns of a product code having a length of *n*₁ × *n*₂, and the first information indicates whether the encoded bits of the *n*₂ columns are correctly decoded.

In this implementation, the technical solution of this application is applied to the product code, and retransmission may be performed at a retransmission granularity of the row or the column of the product code, to improve the spectral efficiency.

In some implementations of the first aspect or the second aspect, the first information includes the first indication part and the second indication part, the first indication part includes T bits, the second indication part includes R bits, the T bits indicate whether the encoded bits of the at least one row in the *n*₁ rows are correctly decoded separately, the R bits indicate whether the encoded bits of the at least one column in the *n*₂ columns are correctly decoded separately, and both T and R are positive integers greater than or equal to 1.

In some implementations of the first aspect or the second aspect, T=*n*₁, R=*n*₂, the first indication part indicates whether encoded bits of each of the *n*₁ rows are correctly decoded, and the second indication part indicates whether encoded bits of each of the *n*₂ columns are correctly decoded.

In some implementations of the first aspect or the second aspect, the at least one group of encoded bits includes K groups of encoded bits, K is an integer greater than 1, and the first information indicates an index of a j^{th} group in the K groups, where the j^{th} group is a 1^{st} group that is incorrectly decoded in a decoding order, and 1 ≤j≤K.

In this implementation, an index of a group in the K groups of encoded bits is fed back. Compared with the foregoing feedback manner, this feedback manner can reduce feedback overheads while reducing a retransmission granularity. This feedback manner may be applied to a hierarchical coding and modulation scheme, a globally coupled code, a spatially coupled code, a product code, and the like, and is applicable to all of them.

In some implementations of the first aspect or the second aspect, the K groups of encoded bits are in one-to-one correspondence with K component codes, each of the K groups of encoded bits is obtained based on a corresponding component code, the first information indicates an index of a first component code in the K component codes, the K component codes correspond to K different layers of a hierarchical modulation constellation diagram, encoded bits of the first component code correspond to a j^{th} layer of the hierarchical modulation constellation diagram, the j^{th} layer is a 1^{st} layer that is incorrectly decoded in the K layers of the hierarchical modulation constellation diagram in a decoding order in descending order of decoding capabilities, 1 ≤j≤K, and K is a quantity of layers of the hierarchical modulation constellation diagram.

In some implementations of the first aspect or the second aspect, the K groups of encoded bits are in one-to-one correspondence with K local codes of a globally coupled code, each of the K groups of encoded bits is obtained based on a corresponding local code, the first information indicates an index of a first local code in the K local codes, and the first local code is a 1^{st} local code that is incorrectly decoded in the K local codes in a decoding order.

In some implementations of the first aspect or the second aspect, the K groups of encoded bits include K groups of encoded bits corresponding to K times of encoding in an encoding window of a spatially coupled code, each of the K groups of encoded bits corresponds to one of the K times of encoding, the first information indicates an index of a j^{th} encoding in the K times of encoding, the j^{th} encoding is a 1^{st} encoding for which decoding is incorrectly performed in a decoding order, 1 ≤ j ≤K, and K is a positive integer.

In some implementations of the first aspect or the second aspect, the K groups of encoded bits include encoded bits of at least one row in *n*₁ rows corresponding to a first component code and encoded bits of at least one column in *n*₂ columns corresponding to a second component code in a product code having a length of *n*₁ × *n*₂, the first information indicates a first row index and a first column index of the product code, the first row index corresponds to an i^{th} row in the at least one of the *n*₁ rows, the i^{th} row is a 1^{st} row with a decoding error among the at least one row in a decoding order, the first column index corresponds to a j^{th} column in the at least one of the *n*₂ columns, and the j^{th} column is a 1^{st} column with a decoding error among the at least one column in a decoding order;
the K groups of encoded bits include encoded bits of *n*₁ rows corresponding to a first component code in a product code having a length of *n*₁ × *n*₂, the first information indicates a first row index of the product code, the first row index corresponds to an i^{th} row of the product code, the i^{th} row is a 1^{st} row with a decoding error in a decoding order, and 1 ≤i≤ *n*₁;
   or
the K groups of encoded bits include encoded bits corresponding to *n*₂ columns corresponding to a second component code in a product code having a length of *n*₁ × *n*₂, the first information indicates a first column index of the product code, the first column index corresponds to a j^{th} column of the product code, the j^{th} column is a 1^{st} column with a decoding error in a decoding order, and 1 ≤ j ≤ *n*₂.

In some implementations of the first aspect or the second aspect, the method further includes: sending a second CB, where the second CB is a first-type CB and/or a second-type CB, where the first-type CB includes an encoded bit that is incorrectly decoded, and the second-type CB includes the encoded bit that is incorrectly decoded and newly transmitted data.

In this implementation, when the sending device retransmits an encoded bit that is incorrectly decoded in a CB, the encoded bit that is incorrectly decoded may be independently retransmitted or retransmitted together with newly transmitted data.

The following methods in a third aspect to a sixth aspect may obtain beneficial technical effects that are the same as or similar to those in the first aspect or the second aspect. Details are not described one by one again.

According to a third aspect, a feedback method is provided. The method may be performed by a first communication device, a component (for example, a processor, a chip, a chip system, or a hardware circuit) in the first communication device, a logical module or software that can implement all or some functions of the first communication device, or the like. The method includes: sending a first signal, where the first signal is carried in a first CBG; and receiving first information, where the first information indicates whether at least two groups of encoded bits corresponding to the first CBG are correctly decoded separately, where the first information includes a first indication part, the first indication part indicates whether a first group of encoded bits in the at least two groups of encoded bits is correctly decoded, and the first indication part is determined based on a decoding result of the first group of encoded bits included in at least two CBs in the first CBG.

According to a fourth aspect, a feedback method is provided. The method may be performed by a second communication device, a component (for example, a processor, a chip, a chip system, or a hardware circuit) in the second communication device, a logical module or software that can implement all or some functions of the second communication device, or the like. The method includes: receiving a first signal, where the first signal is carried in a first CBG; and sending first information, where the first information indicates whether at least two groups of encoded bits corresponding to the first CBG are correctly decoded separately, where the first information includes a first indication part, the first indication part indicates whether a first group of encoded bits in the at least two groups of encoded bits is correctly decoded, and the first indication part is determined based on a decoding result of the first group of encoded bits included in at least two CBs in the first CBG.

In some implementations of the third aspect or the fourth aspect, that the first indication part is determined based on the decoding result of the first group of encoded bits included in the at least two CBs in the first CBG includes: If not all the first group of encoded bits included in the at least two CBs in the first CBG are correctly decoded, the first indication part indicates that the first group of encoded bits is incorrectly decoded.

In some implementations of the third aspect or the fourth aspect, the method further includes: sending a second CBG including a first-type CB and/or a second-type CB, where the first-type CB includes a first group of encoded bits that is incorrectly decoded, and the second-type CB includes the first group of encoded bits that is incorrectly decoded and newly transmitted data.

In some implementations of the third aspect or the fourth aspect, the first group of encoded bits included in the first-type CB or the second-type CB and the first group of encoded bits in the first CBG are a same redundancy version RV or different redundancy versions.

According to a fifth aspect, a feedback method is provided. The method may be performed by a first communication device, a component (for example, a processor, a chip, a chip system, or a hardware circuit) in the first communication device, a logical module or software that can implement all or some functions of the first communication device, or the like. The method includes: sending a first signal, where the first signal is carried in a first TB, the first TB includes K CBGs, and K is an integer greater than or equal to 2; and receiving first information, where the first information indicates whether at least two groups of encoded bits corresponding to each of the K CBGs are correctly decoded.

According to a sixth aspect, a feedback method is provided. The method may be performed by a second communication device, a component (for example, a processor, a chip, a chip system, or a hardware circuit) in the second communication device, a logical module or software that can implement all or some functions of the second communication device, or the like. The method includes: receiving a first signal, where the first signal is carried in a first TB, the first TB includes K CBGs, and K is an integer greater than or equal to 2; and sending first information, where the first information indicates whether at least two groups of encoded bits corresponding to each of the K CBGs are correctly decoded.

In some implementations of the fifth aspect or the sixth aspect, the first information includes K bit groups, the K bit groups are in one-to-one correspondence with the K CBGs, each of the K bit groups indicates whether at least two groups of encoded bits corresponding to a corresponding CBG are correctly decoded, and a first bit group in the K bit groups is determined based on decoding results of at least two groups of encoded bits included in at least two CBs in a corresponding first CBG.

In some implementations of the fifth aspect or the sixth aspect, each of the K bit groups includes m bits, and m is equal to a quantity of encoded bit groups included in one CB.

In some implementations of the fifth aspect or the sixth aspect, the first information includes a first indication part and a second indication part, the first indication part indicates whether the K CBGs are correctly decoded separately, the second part includes Q bit groups, Q is a quantity of CBGs that are incorrectly decoded in the K CBGs, and a first bit group in the Q bit groups indicates whether at least two groups of encoded bits corresponding to a corresponding first CBG that is incorrectly decoded are correctly decoded separately.

In this implementation, in comparison with existing feedback at a CBG granularity, in this feedback manner, a decoding status of each of a plurality of groups of encoded bits (for example, a plurality of component codes) corresponding to a CBG is fed back by extending an indicator field (which is therefore referred to as field extension), and a feedback granularity is smaller. In this way, only an encoded bit part that is incorrectly decoded is retransmitted, and a retransmission granularity is smaller.

In some implementations of the fifth aspect or the sixth aspect, the first indication part includes K bits, the K bits are in one-to-one correspondence with the K CBGs, each of the Q bit groups includes m bits, each of the Q bit groups indicates whether at least two groups of encoded bits corresponding to a corresponding CBG that is incorrectly decoded are correctly decoded, the first bit group in the Q bit groups is determined based on decoding results of the at least two groups of encoded bits included in at least two CBs in the corresponding first CBG, and m is equal to a quantity of encoded bit groups included in one CB.

In this implementation, a decoding status of each of the K CBGs is first indicated, and then a decoding status of each of a plurality of groups of encoded bits (for example, a plurality of component codes) corresponding to a CBG that is incorrectly decoded is fed back. During retransmission, only one or more groups of encoded bits that are incorrectly decoded in the CBG that is incorrectly decoded may be retransmitted. This feedback manner may be referred to as a suffix manner, and can reduce feedback overheads compared with the field extension manner.

In some implementations of the third aspect to the sixth aspect, the at least two groups of encoded bits include any one of the following:

The at least two groups of encoded bits are in one-to-one correspondence with at least two component codes, and the at least two component codes are in one-to-one correspondence with at least two layers of a hierarchical modulation constellation diagram, or the at least two component codes are in one-to-one correspondence with at least two local codes of a globally coupled code;
the at least two groups of encoded bits are in one-to-one correspondence with at least two groups of encoded bits corresponding to at least two staircase steps in an encoding window of a spatially coupled code;
the at least two groups of encoded bits include encoded bits of at least one row in *n*₁ rows and encoded bits of at least one column in *n*₂ columns of a product code having a length of *n*₁ × *n*₂;
the at least two groups of encoded bits include encoded bits of at least two rows in *n*₁ rows of a product code having a length of *n*₁ × *n*₂; or
the at least two groups of encoded bits include encoded bits of at least two columns in *n*₂ columns of a product code having a length of *n*₁ × *n*₂.

According to a seventh aspect, a communication apparatus is provided. The communication apparatus has a function of implementing the method in any one of the first aspect, the third aspect, the fifth aspect, or the possible implementations of the first aspect, the third aspect, or the fifth aspect; or the communication apparatus has a function of implementing the method in any one of the second aspect, the fourth aspect, the sixth aspect, or the possible implementations of the second aspect, the fourth aspect, or the sixth aspect. The function may be implemented by hardware, or may be implemented by hardware by executing corresponding software. The hardware or the software includes one or more units corresponding to the foregoing function.

According to an eighth aspect, this application provides a communication apparatus, including at least one processor. The at least one processor is coupled to at least one memory, the at least one memory is configured to store a computer program or instructions, and the at least one processor is configured to: invoke the computer program or the instructions from the at least one memory and run the computer program or the instructions, to cause the communication apparatus to perform the method in any one of the first aspect, the third aspect, the fifth aspect, or the possible implementations of the first aspect, the third aspect, or the fifth aspect, or perform the method in any one of the second aspect, the fourth aspect, the sixth aspect, or the possible implementations of the second aspect, the fourth aspect, or the sixth aspect.

According to a ninth aspect, this application provides a communication apparatus, including a communication interface and a circuit. The communication interface is configured to: receive information/data, and input the information/data to the circuit. The circuit is configured to: process the received information/data, and output processed information/data. The communication interface is further configured to output the processed information/data, to perform the method in any one of the first aspect, the third aspect, the fifth aspect, or the possible implementations of the first aspect, the third aspect, or the fifth aspect, or perform the method in any one of the second aspect, the fourth aspect, the sixth aspect, or the possible implementations of the second aspect, the fourth aspect, or the sixth aspect.

The first aspect is used as an example. The communication interface is configured to send a first signal, where the first signal is carried in a first CB. The communication interface is further configured to: receive first information, and transmit the first information to the circuit. The circuit is configured to determine, based on the first information, whether at least one group of encoded bits corresponding to the first CB is correctly decoded.

The second aspect is used as an example. The communication interface is configured to receive a first signal, where the first signal is carried in a first CB. The circuit is configured to determine first information, where the first information indicates whether at least one group of encoded bits corresponding to the first CB is correctly decoded. The communication interface is further configured to send the first information.

According to a tenth aspect, this application provides a computer-readable storage medium. The computer-readable storage medium stores computer program code or instructions. When the computer instructions are run on a computer, the method in any one of the first aspect, the third aspect, the fifth aspect, or the possible implementations of the first aspect, the third aspect, or the fifth aspect is implemented, or the method in any one of the second aspect, the fourth aspect, the sixth aspect, or the possible implementations of the second aspect, the fourth aspect, or the sixth aspect is implemented.

According to an eleventh aspect, this application provides a computer program product. The computer program product includes computer program code or instructions. When the computer program code or the instructions are run on a computer, the method in any one of the first aspect, the third aspect, the fifth aspect, or the possible implementations of the first aspect, the third aspect, or the fifth aspect is implemented, or the method in any one of the second aspect, the fourth aspect, the sixth aspect, or the possible implementations of the second aspect, the fourth aspect, or the sixth aspect is implemented.

According to a twelfth aspect, this application provides a wireless communication system, including the foregoing first communication device and second communication device.

### BRIEF DESCRIPTION OF DRAWINGS

FIG. 1 is a diagram of CBG-based retransmission;
FIG. 2 is a diagram of a generator matrix of a product code;
FIG. 3 is a diagram of a system architecture applicable to an embodiment of this application;
FIG. 4 is a schematic flowchart of a feedback method according to this application;
FIG. 5 is a schematic flowchart of hierarchical coding and modulation of a sending device;
FIG. 6 shows an example of a hierarchical modulation constellation diagram;
FIG. 7 is a diagram of performing feedback based on component codes in hierarchical coding and modulation;
FIG. 8 shows an example of performing feedback based on component codes in hierarchical coding and modulation;
FIG. 9 shows another example of performing feedback based on component codes in hierarchical coding and modulation;
FIG. 10 is a diagram of a globally coupled code;
FIG. 11 is a diagram of a spatially coupled code;
FIG. 12 is a diagram of an encoding window L of a sending device using a spatially coupled code;
FIG. 13 is a diagram of a decoding window *L*' of a receiving device using a spatially coupled code;
FIG. 14 is a diagram of a product code;
FIG. 15 is a diagram of performing feedback based on a component code 1 in a product code;
FIG. 16 is a diagram of performing feedback based on a component code 2 in a product code;
FIG. 17 is a diagram of hierarchical modulation and retransmission of a non-hybrid CB;
FIG. 18 is a diagram of hierarchical modulation and retransmission of a hybrid CB;
FIG. 19 is a diagram of a structure of a communication apparatus according to this application;
FIG. 20 is a diagram of a structure of another communication apparatus according to this application; and
FIG. 21 is a diagram of a structure of still another communication apparatus according to this application.

### DESCRIPTION OF EMBODIMENTS

The following describes technical solutions of this application with reference to the accompanying drawings.

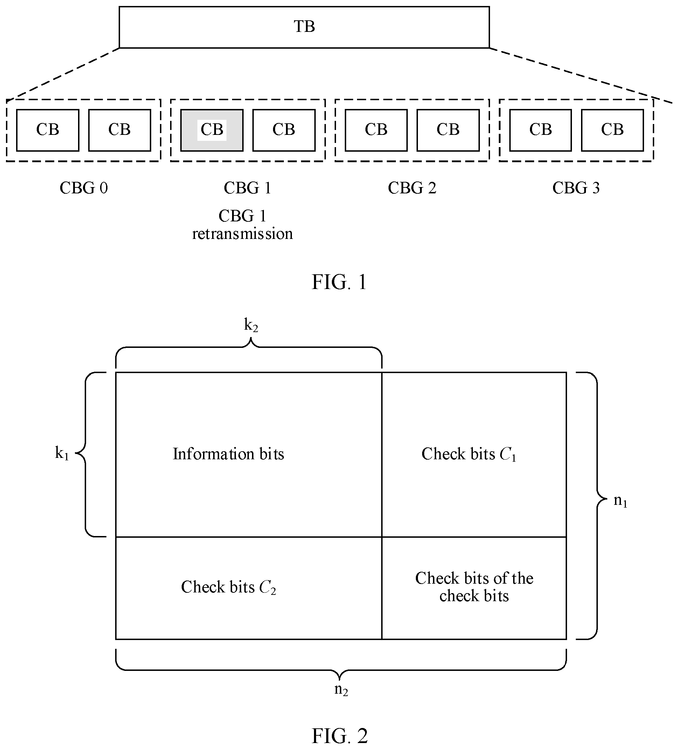

In a 5G system, retransmission based on a code block group (code block group, CBG) is used. FIG. 1 is a diagram of CBG-based retransmission. As shown in FIG. 1, one CBG includes a plurality of CBs, and a receiving end performs feedback based on each CBG. During retransmission, only a CBG that is incorrectly decoded is retransmitted. In other words, both feedback and retransmission are at a CBG granularity. Compared with retransmission of an entire TB, the CBG-based retransmission can reduce a waste of resources. However, spectral utilization efficiency is still low in the feedback and the retransmission at the CBG granularity.

Embodiments of this application relate to a product code and a coupled code.

The product code includes a plurality of different component codes. In comparison with overall check matrix encoding of a low-density parity-check code (low-density parity-check code, LDPC), in the product code, a plurality of component codes may be encoded/decoded in parallel on both an encoding side and a decoding side. Therefore, it is easier to improve a product parallelism degree.

A two-dimensional product code includes two component codes: 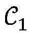 and 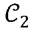 , and two steps of encoding are usually completed through row component encoding and column component encoding. When the product code is constructed, algebraic codes are usually used as the component codes: 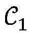 and 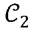 , and this type of product code is widely used. FIG. 2 is a diagram of a generator matrix of a product code. Considering a binary linear code 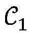 having a code length, an information bit length, and a shortest distance of (*n*₁, *k*₁, *d*₁) respectively and a binary linear code 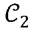 having a code length, an information bit length, and a shortest distance of (*n*₂, *k*₂, *d*₂) respectively, a two-dimensional product code may be obtained through encoding by using the following method: Information bits with a length of *k*₁*k*₂ are arranged as a *k*₂ × *k*₁ matrix *C*₁*,* each row of ***C*₁** is encoded based on 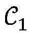 , to obtain a *k*₂ × *n*₁ matrix ***C*₂**, and each column of ***C*₂** is encoded based on 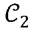 , to obtain an *n*₂ × *n*₁ matrix ***C***, that is, a two-dimensional product codeword, determined based on 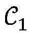 and 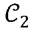 , with a length of *n*₁ × *n*₂.

A spatially coupled LDPC (spatially coupled LDPC, SC-LDPC) is an encoding scheme that approaches a capacity, and uses conventional codes such as an LDPC, a (Reed-Solomon Code, RS), and a (Bose-Chaudhuri-Hocquenghem Code, BCH) as component codes to perform convolutional superposition and the like to construct new codewords. The spatially coupled LDPC is a constructable code proposed based on the LDPC. Compared with the LDPC, the SC-LDPC not only has better decoding performance, but also has a relatively simple encoding structure. Theoretically, the SC-LDPC can approach the Shannon limit, and uses a unique syndrome antecedent encoding scheme and a unique sliding window decoding scheme to effectively reduce encoding and decoding complexity. Because a large quantity of component codes are split, and code lengths of the component codes are all short, code rate adaptation of the SC-LDPC is difficult to design. Currently, the SC-LDPC is mainly used in the storage field, the optical communication field, and the like.

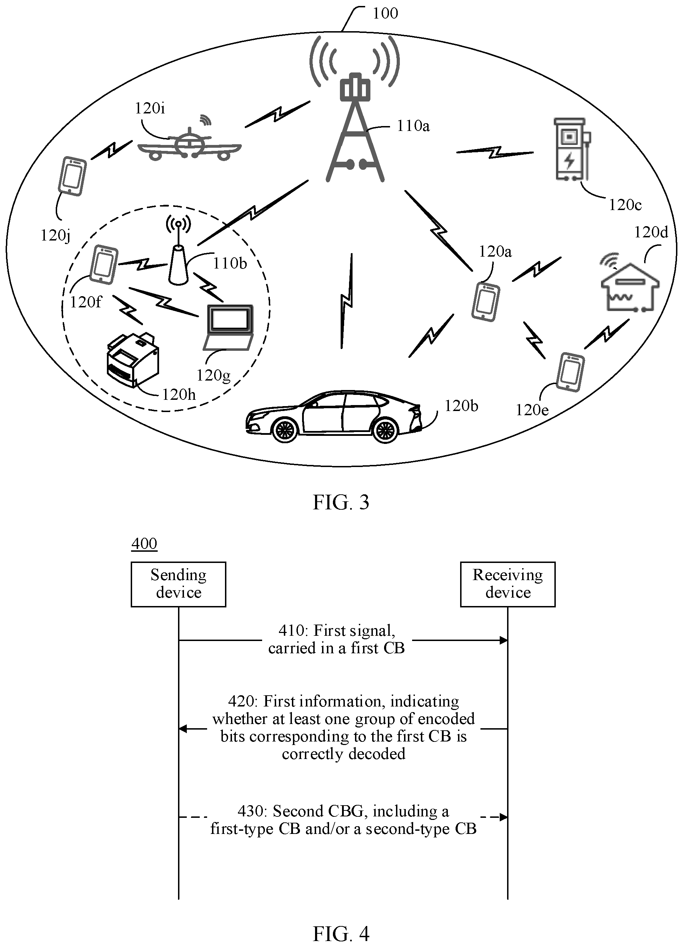

FIG. 3 is a diagram of a system architecture 100 applicable to an embodiment of this application. As shown in FIG. 3, the system architecture 100 may include at least one network device (for example, 110a and 110b in FIG. 3), and may further include at least one terminal device (for example, 120a to 120j in FIG. 3). Network devices, terminal devices, or a network device and a terminal device may be connected and communicate with each other in a wired or wireless manner. Embodiments of this application relate to a sending device and a receiving device. A quantity of sending devices is not limited to one or more, and a quantity of receiving devices is not limited to one or more. For example, one of the sending device and the receiving device may be a network device (for example, a radio access network device), and the other is a terminal device. Alternatively, both the sending device and the receiving device are network devices or terminal devices. This is not limited.

The terminal device in embodiments of this application includes various communication kits (communication kits, where the communication kits may include, for example, an antenna, a power supply template, a cable, and a wireless fidelity (wireless fidelity, Wi-Fi) module) with a wireless communication function, a handheld device, a vehicle-mounted device, and another processing device connected to a wireless modem, and may be specifically user equipment (user equipment, UE), a user, an access terminal, a subscriber unit, a subscriber station, a mobile station, a remote station, a remote terminal, a mobile device, a user terminal, a terminal, a wireless communication device, a user agent, a user apparatus, a wireless modem, a machine-type communication device, or another processing device connected to a wireless modem. The terminal device may alternatively be a virtual reality (virtual reality, VR) terminal device, an augmented reality (augmented reality, AR) terminal device, a wireless terminal in industrial control (industrial control), a terminal in self driving (self driving), a terminal in remote medical (remote medical), a terminal in a smart grid (smart grid), a terminal in transportation safety (transportation safety), a terminal in a smart city (smart city), a terminal in a smart home (smart home), a terminal device in a future communication network, or the like. Certainly, the terminal device in this application may alternatively be a chip, a modem, or a system-on-a-chip (system-on-a-chip, SoC) that is mainly responsible for a related communication function in a device, or a communication platform that may include a radio frequency (radio frequency, RF) part or the like.

The network device in embodiments of this application may include but is not limited to a next generation NodeB (gNodeB, gNB) in a 5th generation (5th generation, 5G) communication system, a base station in a 6th generation (6th generation, 6G) mobile communication system, a base station in a future mobile communication system, an access point (access point, AP) in a wireless fidelity (wireless fidelity, Wi-Fi) system, a wireless relay node, a wireless backhaul node, a transmission point (transmission point, TP), a transmission reception point (transmission reception point, TRP), an evolved NodeB (evolved NodeB, eNB) in a long term evolution (long term evolution, LTE) system, a network device in a non-terrestrial network (non-terrestrial network, NTN) communication system, and the like. The network device may alternatively be one antenna panel or a group of (namely, a plurality of) antenna panels of a base station. In addition, the network device may alternatively be a network node that constitutes a gNB or a TP, for example, a baseband processing unit (baseband unit, BBU), a central unit (central unit, CU), a distributed unit (distributed unit, DU), or a radio unit (radio unit, RU). Alternatively, the network device may be a device that undertakes a network-side function in a device-to-device (device-to-device, D2D) communication system, a machine-to-machine (machine-to-machine, M2M) communication system, an internet of things (Internet of Things, IoT), an internet of vehicles communication system, or another communication system, or the like. This is not limited.

In embodiments of this application, an apparatus for implementing a function of the terminal may be a terminal, or may be an apparatus that can support the terminal in implementing the corresponding function, for example, a chip (or a chip system) or a chip. The apparatus may be installed in the terminal. In addition, an apparatus for implementing a function of the network device may be a network device, or may be an apparatus that can support the network device in implementing the corresponding function, for example, a chip (or a chip system) or a circuit. The apparatus may be installed in the network device. Optionally, the chip system may include a chip, or include a chip and another discrete device.

The technical solutions of this application are mainly applicable to a component code-based structure code. Based on characteristics of the component structure code, targeted feedback and retransmission are performed on a part of component codes in a codeword. In comparison with feedback and retransmission performed on the entire codeword, the feedback and retransmission are performed at a smaller granularity, thereby improving spectral efficiency.

FIG. 4 is a schematic flowchart of a feedback method according to this application. The method 200 may be performed by corresponding communication devices, for example, a sending device and a receiving device, or may be performed by an apparatus used in a corresponding communication device (for example, a chip, a chip system, or a circuit of a sending device/receiving device). The following separately uses the sending device and the receiving device as an example for description.

410: The sending device sends a first signal. The first signal is carried in a first CB.

The receiving device receives the first signal.

The first CB may be any CB in any TB sent by the sending device. The first signal may be information and/or data included in the first CB.

The receiving device feeds back a decoding status of the first CB to the sending device. In this embodiment of this application, the receiving device may feed back, based on a respective decoding status of at least one group of encoded bits corresponding to the first CB, a CB receiving status to the sending device at a granularity less than a CBG or a CB. Specifically, feedback may be performed to the sending device based on a component code granularity.

420: The receiving device sends first information, where the first information indicates whether the at least one group of encoded bits corresponding to the first CB is correctly decoded separately.

The sending device receives the first information.

In some embodiments, the at least one group of encoded bits may be K groups of encoded bits, and K is a positive integer greater than 1.

In this embodiment of this application, in different coding schemes, the at least one group of encoded bits corresponding to the first CB may have different meanings. The following embodiments separately provide detailed descriptions of applying the solutions of this application to hierarchical coding and modulation, a coupled code, and a product code.

In addition, for a specific implementation in which the first information indicates whether the at least one group of encoded bits corresponding to the first CB is correctly decoded separately, this application provides the following Manner 1 and Manner 2.

### Manner 1

The first information includes P bits, and the P bits indicate whether K component codes are correctly decoded separately. Q bits that are in the P bits and indicate whether a first group of encoded bits is correctly decoded are determined based on a decoding result of the first group of encoded bits, Q is less than P, Q is a positive integer greater than or equal to 1, K is a positive integer greater than 1, and P is a positive integer.

In Manner 1, the first information indicates whether each of the K groups of encoded bits is correctly decoded. A quantity of bits included in the first information is not limited. For example, in an implementation, P=K. In other words, the quantity of bits included in the first information is equal to a quantity of component codes, so that each of the K bits indicates whether one of the K component codes is correctly decoded. In another implementation, P>K. For example, the first information includes K bit groups, the K bit groups are in one-to-one correspondence with the K groups of encoded bits, and each bit group indicates whether a corresponding group of encoded bits is correctly decoded. A quantity of bits included in each of the K bit groups is not limited. For example, quantities of bits respectively included in the K bit groups may be equal or unequal.

### Manner 2

The first information indicates an index of a j^{th} group in the K groups of encoded bits, where the j^{th} group is a 1^{st} group that is incorrectly decoded in a decoding order, 1≤j≤K, and j is an integer.

In Manner 2, the first information indicates the index of the j^{th} group in the K groups of encoded bits. In different coding schemes, it may indicate that the j^{th} group of encoded bits and another group of encoded bits having a decoding capability lower than that of the j^{th} group are incorrectly decoded, or the j^{th} group of encoded bits and another group of encoded bits having a decoding ranking that is after the j^{th} group are incorrectly decoded. Therefore, the sending device retransmits the encoded bits that are incorrectly decoded.

The following describes specific applications of Manner 1 and Manner 2 with reference to specific coding schemes.

### 1. Hierarchical coding and modulation

In the hierarchical coding and modulation, the K groups of encoded bits are in one-to-one correspondence with the K component codes, and each of the K groups of encoded bits is obtained based on a corresponding component code. The K component codes are in one-to-one correspondence with K layers of a hierarchical constellation diagram, and the K layers correspond to different decoding capabilities.

For example, the decoding capabilities of the K layers depend on one or more of the following parameters: a code pattern, a code rate, or a corresponding constellation point location in the hierarchical constellation diagram. Because the K component codes respectively correspond to the K layers of the hierarchical constellation diagram, it may be said that one or more of these parameters of any two of the K component codes are different. The code pattern includes but is not limited to one or more of the following: a polar code, an LDPC, a globally coupled code, a spatially coupled code, a product code, a BCH code, an RS code, an RM code, an algebraic code, or the like. The LDPC may further include an SC-LDPC or another type of LDPC.

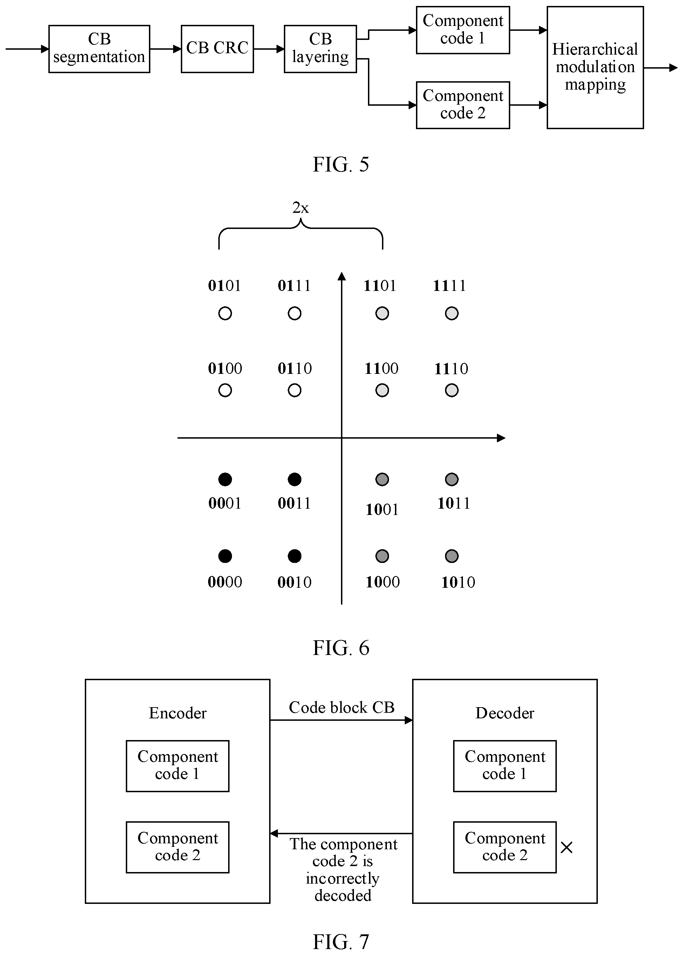

FIG. 5 is a schematic flowchart of hierarchical coding and modulation of a sending device. As shown in FIG. 5, coding based on hierarchical coding and modulation is a component structure code with coding including two or more component codes. Encoded bits obtained through encoding based on different component codes correspond to different layers of a hierarchical modulation constellation diagram. As shown in FIG. 5, after CB segmentation, cyclic redundancy check (cyclic redundancy check, CRC) addition, and the like are performed on to-be-encoded information, CB layering is performed, based on a quantity of component codes, on a bit sequence to which CRC is added, and then different layers are modulated to different layers of the hierarchical constellation diagram. For example, if there are two component codes, an information sequence to which the CRC is added is divided into two layers, where a layer 1 is encoded by using a component code 1, and an obtained encoded bit is modulated to a layer 1 of the hierarchical constellation diagram; and a layer 2 is encoded by using a component code 2, and an obtained encoded bit is modulated to a layer 2 of the hierarchical constellation diagram.

FIG. 6 shows an example of a hierarchical modulation constellation diagram. As shown in FIG. 6, each modulation symbol in one CB includes encoded bits of a plurality of component codes. Because different component codes correspond to different code patterns, different code rates, different constellation point locations in the hierarchical modulation constellation diagram, and the like, decoding capabilities of different encoded bits are different. 16QAM is used as an example. A quadrature phase shift keying (quadrature phase shift keying, QPSK) constellation diagram forms first two bits of a symbol, and a distance between constellation points in the constellation diagram is larger. Therefore, a higher code rate may be used, and a decoding capability is relatively weak. Another QPSK constellation diagram forms last two bits of the symbol, a distance between constellation points in the constellation diagram is shorter, and a lower code rate needs to be used. Therefore, a decoding capability is relatively strong. Based on modulation and coding differences between the two layers, corresponding demodulation and decoding performance on the receiving device is also different. The 16QAM shown in FIG. 6 is used as an example. Every two bits of a 1^{st} layer are mapped to first two bits of each 16QAM constellation diagram, and every two bits of a 2^{nd} layer are mapped to last two bits of the 16QAM constellation diagram. Because the first two bits have four same constellation points in each quadrant, a receiving end may determine the first two bits based only on different quadrants during demodulation. Assuming that each unit distance represents a Euclidean distance between two adjacent constellation points, a Euclidean distance between the first two bits is two unit distances. The last two bits have four different constellation points in each quadrant. Therefore, a Euclidean distance between the last two bits is one unit distance.

In hierarchical coding and modulation, because each symbol in one CB includes encoded bits of a plurality of component codes, it may also be said that the CB includes or corresponds to a plurality of component codes. Encoded bits of the plurality of component codes are mapped to different layers of the hierarchical modulation constellation diagram, and correspond to different decoding capabilities. Therefore, the receiving device may separately determine decoding results of the plurality of component codes, and indicate decoding statuses to the sending device at a component code granularity.

FIG. 7 is a diagram of performing feedback based on component codes in hierarchical coding and modulation. As shown in FIG. 7, an encoder of the sending device includes at least two component codes (for example, the component code 1 and the component code 2), and a CB obtained through encoding of the component codes includes encoded bits of different component codes. Different component codes have different decoding rankings and decoding capabilities at the receiving end. In a case in which only a part of component codes is incorrectly decoded, to save retransmission resources, a decoder side may feed back only an index of the component code that is incorrectly decoded. For example, if the component code 1 is correctly decoded, but the component code 2 is incorrectly decoded, information indicating the component code 2 is sent to the sending device. The sending device retransmits the component code 2 based on feedback of the receiving device.

The following describes how the receiving device specifically feeds back a component code that is incorrectly received.

### (1) For a single CB

(a) Based on a one-to-one mapping relationship between the P bits included in the first information and K component codes (that is, K layers of the hierarchical modulation constellation diagram) corresponding to the CB, values of the P bits indicate whether the K component codes are correctly decoded separately.

This is an application of Manner 1 in hierarchical coding and modulation.

For example, P=K=2, indicating that the first CB includes two component codes: the component code 1 and the component code 2, the first information includes two bits, and each bit corresponds to one of the two component codes. A value of each bit indicates whether the corresponding component code is correctly decoded. For example, 11 indicates that both of the component codes are correctly decoded, and 10 indicates that the component code 1 is correctly decoded and the component code 2 is incorrectly decoded.

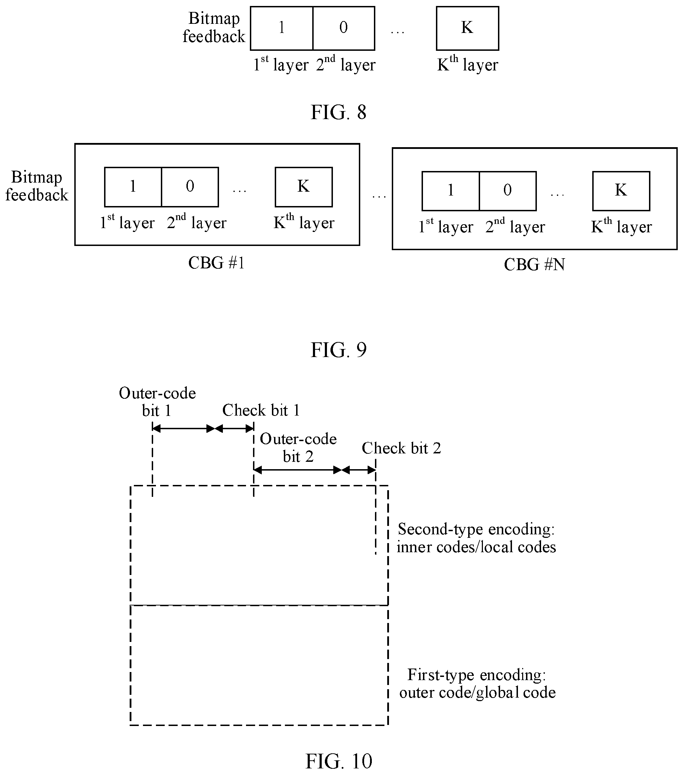

FIG. 8 shows an example of performing feedback based on component codes in hierarchical coding and modulation. In FIG. 8, that the hierarchical modulation constellation diagram includes K layers is used as an example. The first information includes K bits, and the K bits are in one-to-one correspondence with K component codes. If a value of a bit is 0, it indicates that a component code corresponding to the bit is incorrectly decoded; or if a value of the bit is 1, it indicates that a component code corresponding to the bit is correctly decoded.

In this implementation, a corresponding hierarchical modulation constellation diagram may be selected based on a quantity K of component codes corresponding to the CB. In other words, a quantity of layers of the hierarchical modulation constellation diagram should meet a requirement of hierarchical modulation mapping of the K component codes.

(b) An index of a layer is indicated, to indicate that a component code corresponding to the layer is incorrectly decoded.

This is an application of Manner 2 in hierarchical coding and modulation.

As described above, different layers of the hierarchical modulation constellation diagram have different decoding capabilities. When the decoding capabilities of the different layers are arranged in descending order, if a layer with a higher decoding capability has been incorrectly decoded, a layer with a lower decoding capability basically cannot be correctly decoded. Based on this, the receiving device may use this characteristic to reduce unnecessary decoding. For example, the receiving device performs decoding in descending order of the decoding capabilities. When a layer (for example, a j^{th} layer) with a higher decoding capability is incorrectly decoded, the receiving device no longer decodes another layer having a decoding capability lower than that of the layer, and indicates an index of the j^{th} layer to the sending device. By default, the sending device retransmits all remaining layers having decoding capabilities lower than that of the j^{th} layer. This feedback manner may reduce feedback overheads.

FIG. 8 is used as an example. From a 1^{st} layer to a K^{th} layer, encoding code rates gradually decrease, and decoding capabilities gradually increase. Assuming that the receiving device uses a serial iterative decoding method, a decoding order is: first demodulating and decoding the K^{th} layer, then demodulating and decoding a (K-1)^{th} layer, and by analogy, finally demodulating and decoding the 1^{st} layer. In a process of performing demodulation and decoding in the decoding order, if decoding at the j^{th} layer fails, there is a high probability that an error occurs in decoding at a (j-1)^{th} layer and subsequent decoding due to impact of error propagation. In this case, to reduce feedback overheads, the receiving device does not need to feed back an entire bitmap in the manner in (a), and only needs to feed back the index of the j^{th} layer, indicating that the j^{th} layer to the 1^{st} layer all need to be retransmitted.

The foregoing uses one CB as an example to describe a feedback manner of decoding statuses of a plurality of component codes corresponding to the CB. Based on a similar idea, a CBG including a plurality of (including two or more) CBs, or a plurality of CBGs may be fed back.

### (2) For a single CBG

When the CBG is fed back, the first information is information indicating a decoding status of the single CBG.

Specifically, the first information indicates whether K component codes corresponding to the single CBG are correctly decoded separately. As described above, the first information includes the P bits, the P bits are in one-to-one correspondence with the K component codes, and a value of P is not limited. For example, if P=K, the first information includes K bits, the K bits are in one-to-one correspondence with the K component codes, and a value of each bit indicates whether a corresponding component code is correctly decoded. For another example, P is greater than K, the P bits may be grouped into K bit groups, and each bit group corresponds to one component code. A value of each bit group indicates whether the corresponding component code is correctly decoded. In addition, quantities of bits respectively included in the K bit groups may be equal or unequal. This is not limited.

In an example, it is assumed that P=K. Different from the foregoing single CB, one CBG includes a plurality of CBs, and each CB includes K component codes. For example, the CBG includes two CBs (for example, a CB 1 and a CB 2), and each of the CB 1 and the CB 2 includes two component codes (for example, denoted as a component code 1 and a component code 2). Therefore, values of the K bits included in the first information may be obtained based on worst decoding statuses of the component code 1 and the component code 2 in the plurality of CBs. For example, if a component code 2 in a 1^{st} CB is incorrectly decoded, and both a component code 1 and a component code 2 in a 2^{nd} CB are incorrectly decoded, a worst decoding status of the component code 1 in the CB 1 and the CB 2 is incorrect decoding, and a worst decoding status of the component code 2 in the CB 1 and the CB 2 is also incorrect decoding. Therefore, the first information fed back by the receiving device may be 00, to indicate that both the component code 1 and the component code 2 corresponding to the CBG are incorrectly decoded.

In addition, the solution of feeding back an index of a layer of the hierarchical coding and modulation constellation diagram in Manner 2 is also applicable. For example, a component code 1 in the 1^{st} CB is incorrectly decoded (which also indicates that a 1^{st} layer of the hierarchical coding and modulation constellation diagram that corresponds to the component code 1 is incorrectly decoded), and the component code 1 is correctly decoded and the component code 2 is incorrectly decoded in the 2^{nd} CB (which also indicates that a 2^{nd} layer of the hierarchical coding and modulation constellation diagram that corresponds to the component code 2 is incorrectly decoded). It is assumed that a decoding capability of the 1^{st} layer is lower than a decoding capability of the 2^{nd} layer. With reference to decoding statuses of the component code 1 and the component code 2 in each of the 1^{st} CB and the 2^{nd} CB, if feedback is performed based on worst decoding statuses of the 1^{st} CB and the 2^{nd} CB, an index of a 1^{st} layer that is incorrectly decoded should be fed back in descending order of the decoding capabilities. For example, the 1^{st} layer corresponding to the component code 1 in the 1^{st} CB is incorrectly decoded, and the 2^{nd} layer corresponding to the component code 2 in the 2^{nd} CB is incorrectly decoded. Based on a worst decoding status, the receiving device finally feeds back an index of the component code 2 (or an index of the 2^{nd} layer of the hierarchical coding and modulation constellation diagram), to indicate that both layers of the CBG need to be retransmitted.

### (3) For a plurality of CBGs

For the plurality of CBGs, for example, at least two CBs in one TB, or all CBGs included in one TB, feedback may also be performed based on a component code. Four CBGs are used as an example. In an existing standard, four bits respectively indicate whether the four CBGs are correctly decoded. For example, 1 indicates an acknowledgement (acknowledgement, ACK), and 0 indicates a negative acknowledgement (negative acknowledgement, NACK). In this application, when feedback is performed based on the component code, decoding statuses of the four CBGs may be fed back in the following field extension manner or suffix manner.

### (a) Field extension manner

The first information includes K bit groups, all of the bit groups are in one-to-one correspondence with K CBGs, and each of the K bit groups indicates whether at least two groups of encoded bits corresponding to a corresponding CBG are correctly decoded. The at least two groups of encoded bits are in one-to-one correspondence with at least two component codes in hierarchical coding and modulation, and a first bit group in the K bit groups is determined based on decoding results of at least two component codes included in at least two CBs in a corresponding first CBG.

Four CBGs (for example, represented as a CBG 1 to a CBG 4) are used as an example. The first information may include four bit groups, and the four bit groups are in one-to-one correspondence with the four CBGs. The first information may be represented as (11)(10)(00)(11), indicating that a component code 2 of a CBG 2 is incorrectly decoded, a component code 1 and a component code 2 of a CBG 3 are both incorrectly decoded, and a component code 1 and a component code 2 of each of the CBG 1 and the CBG 4 are correctly decoded. Values of two bits included in the first bit group are determined based on decoding results of at least two component codes of at least two CBs included in the CBG 1. For example, it is assumed that each CBG includes four CBs, and two component codes (for example, a component code 1 and a component code 2) are used for hierarchical coding and modulation. In this case, according to a principle of feeding back a worst status of each of at least two component codes included in a plurality of CBs in a CBG in the foregoing embodiment, the values of the two bits in the first bit group may be determined.

In an example, if a component code 1 in at least one of four CBs included in the CBG 1 is incorrectly decoded, a value of a bit for the component code 1 indicates incorrect decoding. Similarly, if a component code 2 in at least one of four CBs included in the CBG 1 is incorrectly decoded, a value of a bit for the component code 2 indicates incorrect decoding. If a value of 1 indicates correct decoding, and a value of 0 indicates incorrect decoding, that the values of the two bits included in the first bit group are 11 indicates that both the component code 1 and the component code 2 in the CBG 1 are correctly decoded.

In another example, indicating whether at least two component codes corresponding to one CBG are correctly decoded separately may not use the worst decoding status but may be determined according to another rule. For example, one CBG includes a plurality of CBs. For one component code, feeding back whether the component code is correctly decoded may be related to a quantity of times that the component code is incorrectly or correctly decoded in the plurality of CBs. For example, one CBG includes four CBGs. If a proportion of a quantity of times that a component code 1 is incorrectly decoded in a CB 1 to a CB 4 in a total quantity of decoding times is greater than or equal to 50%, incorrect decoding of the component code 1 is fed back. For example, if the component code 1 is incorrectly decoded in the CB 1, a CB 2, and a CB 3, and is correctly decoded in the CB 4, incorrect decoding of the component code 1 is fed back.

In these examples, the CBG 1 is used as an example for description. The remaining CBG 2 to CBG 4 are similar, and details are not described one by one again.

FIG. 9 shows an example of feeding back decoding statuses of a plurality of CBGs in a field extension manner. As shown in FIG. 9, for N CBGs, the first information includes N bit groups, each bit group includes K bits, and the K bits are in one-to-one correspondence with K component codes. In a bit group, if a value of a bit is 1, it indicates that a component code corresponding to the bit is correctly decoded; or if a value of a bit is 0, it indicates that a component code corresponding to the bit is incorrectly decoded. As described above, a quantity of bits included in each bit group herein is merely an example, and a correspondence between the bit value and the correct decoding or the incorrect decoding is also an example.

### (b) Suffix manner

The first information includes a first indication part and a second indication part, the first indication part indicates whether K CBGs are correctly decoded separately, the second part includes Q bit groups, and Q is a quantity of CBGs that are incorrectly decoded in the K CBGs. A first bit group in the Q bit groups indicates whether at least two groups of encoded bits (corresponding to at least two component codes in hierarchical coding and modulation) corresponding to a corresponding CBG that is incorrectly decoded are correctly decoded.

Four CBGs (for example, represented as a CBG 1 to a CBG 4) are used as an example. The first indication part in the first information indicates whether the four CBGs are correct. Assuming that a CBG 2 and a CBG 3 are incorrectly decoded, the second indication part in the first information further indicates a decoding status of each of at least two component codes corresponding to each of the CBG 2 and the CBG 3.

In an example, the first indication part includes K bits, and the K bits are in one-to-one correspondence with the K CBGs. The second indication part includes the Q bit groups, each bit group includes m bits, and m is a quantity of component codes included in one CB.

Four CBGs (for example, represented as the CBG 1 to the CBG 4) are used as an example. The first information is 1001(10)(00), and first four bits respectively indicate whether the CBG 1 to the CBG 4 are correctly decoded separately. It can be learned that the CBG 1 and the CBG 4 are correctly decoded, and the CBG 2 and the CBG 3 are incorrectly decoded. Further, the second indication part includes two bit groups, and the two bit groups respectively indicate decoding statuses of component codes in the CBGs that are incorrectly decoded. 10 indicates that a component code 1 is correctly decoded but a component code 2 is incorrectly decoded in the CBG 2; and 00 indicates that both a component code 1 and a component code 2 in the CBG 3 are incorrectly decoded. It can be learned that, in the suffix manner, the first indication part first indicates a decoding status of each CBG at a coarse granularity, and then the second indication part further indicates a CBG corresponding to a NACK, and specifically indicates a decoding status of each component code in the CBG corresponding to the NACK. Compared with the field extension manner, the suffix manner can reduce feedback overheads.

In the examples of the field extension manner and the suffix manner, when a decoding status of each component code in one CBG is indicated, feedback is performed based on a worst decoding status of each component code in a plurality of CBs included in the CBG.

The foregoing describes in detail specific implementations of feeding back the single CB, the single CBG, and the plurality of CBGs at the component code granularity. The following describes applications of feedback based on the component code granularity in a coupled code and a product code.

### 2. Coupled code

The coupled code may be classified into a globally coupled code and a spatially coupled code.

### (1) Globally coupled code

FIG. 10 is a diagram of a globally coupled code. The globally coupled code is a concatenated code. In the globally coupled code, first-type encoding is a global code that is first encoded as an outer code of the concatenated code; and second-type encoding includes a plurality of local codes that are encoded as inner codes of the concatenated code based on bits obtained through outer encoding. For each local code, a part of information bits and a corresponding check bit are obtained, for example, an outer-code bit 1 and a check bit 1, or an outer-code bit 2 and a check bit 2.

For this characteristic of the globally coupled code, a manner of feeding back whether a single CB, a single CBG, or a plurality of CBGs are correctly decoded is similar to the foregoing feedback manner in hierarchical coding and modulation.

In the globally coupled code, it is assumed that K local codes are included, and the K local codes are K component codes. Therefore, that the K component codes in the implementations described in the hierarchical coding and modulation scheme are correspondingly replaced with the K local codes in the globally coupled code is applications of these implementations in the globally coupled code. Therefore, the globally coupled code is merely briefly described herein.

### (1) For a single CB

In an implementation, based on a one-to-one mapping relationship between the P bits included in the first information and the K local codes (that is, the K component codes), values of the P bits indicate whether K local codes corresponding to one CB are correctly decoded separately.

One global code and two local codes are used as an example, that is, K=2. Assuming that P=K, the first information includes two bits, and the two bits are in one-to-one correspondence with the two local codes. For example, 11 indicates that both of the local codes are correctly decoded, and 10 indicates that a local code 1 is correctly decoded but a local code 2 is incorrectly decoded.

In another implementation, the first information indicates an index of a local code that is incorrectly decoded. The local code that is incorrectly decoded may be a 1^{st} local code that is incorrectly decoded in a decoding order.

### (2) For a single CBG

In the globally coupled code, a feedback principle for the CBG is completely similar to the feedback principle for the CBG in the foregoing hierarchical coding and modulation. The plurality of component codes described in hierarchical coding and modulation correspond to a plurality of local codes in the globally coupled code. Details are not described again.

### (3) For a plurality of CBGs

In the globally coupled code, a feedback principle for the plurality of CBGs is completely similar to the feedback principle for the plurality of CBGs in the foregoing hierarchical coding and modulation. The plurality of component codes described in hierarchical coding and modulation correspond to a plurality of local codes in the global coupled code. Details are not described again.

### (2) Spatially coupled code

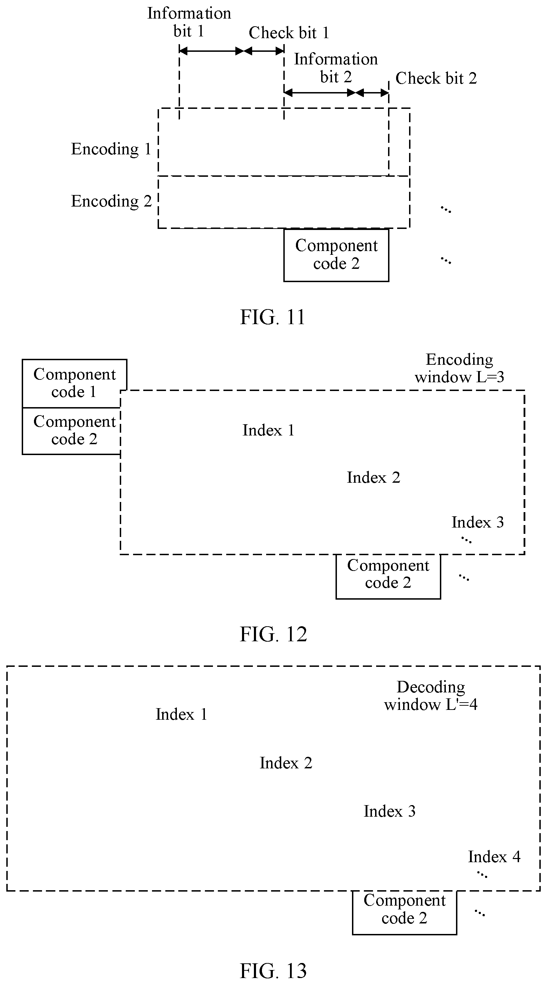

FIG. 11 is a diagram of a spatially coupled code. Compared with the foregoing globally coupled code being a block code, the spatial coupled code is a convolutional code, and the sending device may perform infinite encoding. The spatially coupled code is a stepped convolutional code structure shown in FIG. 11. Encoding 1 is encoding an information bit 1 by using a component code 1 to obtain a check bit 1, encoding 2 is encoding the information bit 1 and an information bit 2 by using a component code 2 and the component code 1 to obtain a check bit 2, and the check bit 2 can correct errors of both the information bit 1 and the information bit 2. The rest may be deduced by analogy.

The sending device may be configured with an encoding window L, corresponding to L staircase steps and corresponding to L times of encoding. The receiving end is configured with a decoding window *L',* corresponding to *L*' staircase steps. FIG. 12 and FIG. 13 below respectively provide examples of one encoding window and one decoding window. It should be noted that the encoding window in FIG. 12 and the decoding window in FIG. 13 are separately provided as examples, are not associated with each other, and should not be understood in combination.

FIG. 12 is a diagram of an encoding window L of a sending device using a spatially coupled code. In FIG. 12, a length L of the encoding window is 3, indicating that the encoding window includes three times of encoding, respectively corresponding to three steps, where each step is one time of encoding. For example, one time of encoding corresponding to an index 1 in FIG. 12 is performed by using a component code 2 and a component code 1. For an encoding process, refer to the descriptions of the encoding 2 in FIG. 11.

FIG. 13 is a diagram of a decoding window *L*' of a receiving device using a spatially coupled code. In FIG. 13, the decoding window *L'*=4, respectively corresponding to four steps corresponding to an index 1 to an index 4, where the four steps correspond to four times of encoding at an encoder side.

In the spatially coupled code, the K groups of encoded bits are in one-to-one correspondence with K steps in the encoding window. An i^{th} group of encoded bits in the K groups of encoded bits is obtained based on at least one component code corresponding to an i^{th} step in the K steps. For example, the encoding window shown in FIG. 12 is used as an example. The K groups of encoded bits correspond to three groups of encoded bits in the window that are respectively three groups of encoded bits corresponding to the index 1 to an index 3. One group of encoded bits corresponding to each of the index 1 to the index 3 is obtained through encoding based on the component code 1 and the component code 2.

For this characteristic of the spatially coupled code, manners in which the receiving device feeds back whether a CB or a CBG is correctly decoded are as follows.

### (1) For a single CB

(a) Based on a one-to-one correspondence between the P bits included in the first information and the K groups of encoded bits, values of the P bits indicate whether the K groups of encoded bits are correctly decoded separately.

The first information includes the P bits, the Q bits that are in the P bits and indicate whether the first group of encoded bits is correctly decoded are determined based on the decoding result of the first group of encoded bits, Q is less than P, and Q is the positive integer greater than or equal to 1. The first group of encoded bits is any one of the K groups of encoded bits. A group of encoded bits corresponding to an index 2 in the encoding window shown in FIG. 12 is still used as an example. The P bits include Q bits indicating whether the group of encoded bits corresponding to the index 2 is correctly decoded, and values of the Q bits are determined based on a decoding result of the group of encoded bits corresponding to the index 2 on a receiving device side. For example, if the receiving device incorrectly decodes the group of encoded bits corresponding to the index 2, the values of the Q bits indicate incorrect decoding; or if the receiving device correctly decodes the group of encoded bits corresponding to the index 2, the values of the Q bits indicate correct decoding. An indication of any one of the K groups of encoded bits is similar. Details are not described again. For example, if the encoding window L=3, as shown in FIG. 12, the quantity of bits included in the first information may be equal to the length of the encoding window, that is, P=3. The three bits included in the first information respectively indicate whether the three groups of encoded bits corresponding to the index 1 to the index 3 are correctly decoded separately. For example, if a value of a bit is 1, it indicates that a corresponding group of encoded bits is correctly decoded; or if a value of the bit is 0, it indicates that a corresponding group of encoded bits is incorrectly decoded. In this case, if the first information is 101, it indicates that the group of encoded bits corresponding to the index 2 is incorrectly decoded, and encoded bits corresponding to the index 1 and the index 3 are all correctly decoded. The sending device may retransmit a codeword obtained through one time of encoding corresponding to the index 2.

It can be learned that, in this manner, the first information may indicate a decoding status of the receiving device at a granularity of a step in the encoding window of the spatially coupled code. On this basis, the receiving device may further indicate whether at least one component code corresponding to each step is correctly decoded separately.

As described above, the Q bits indicate whether the first group of encoded bits in the K groups of encoded bits is correctly decoded. Assuming that the first group of encoded bits corresponds to r component codes, q bits in the Q bits indicate whether the r component codes are correctly decoded separately, where Q is greater than or equal to q, r is greater than or equal to 1, and both q and r are positive integers. Specific values of q and r are not limited.

For example, in an example, q=r. The encoding window shown in FIG. 12 is used as an example. A group of encoded bits corresponding to the index 1 corresponds to two component codes: a component 1 and a component code 2, that is, r=2. Therefore, q=2. The two bits indicate whether the two component codes are correctly decoded separately. Because the length L of the encoding window is 3, the P bits included in the first information may be grouped into three bit groups, and the three bit groups are in one-to-one correspondence with the three groups of encoded bits corresponding to the index 1 to the index 3. Assuming that a bit group corresponding to the index 1 in the three bit groups is a bit group 1, the bit group 1 may include two bits, and the two bits indicate whether the component code 1 and the component code 2 included in one time of encoding corresponding to the index 1 are correctly decoded separately. Feedback indications of other two groups are similar. In this way, for example, if the first information is (11)(10)(01), it indicates that both a component code 1 and a component code 2 in encoding 1 corresponding to the index 1 are correctly decoded; a component code 2 in encoding 2 corresponding to the index 2 is incorrectly decoded; and a component code 1 in encoding 3 corresponding to the index 3 is incorrectly decoded.

This is an application of Manner 1 in the spatially coupled code.

(b) An index of a step in the encoding window is indicated.

As described above, because the K steps in the encoding window correspond to K times of encoding (that is, K groups of encoded bits), the first information may indicate an index of a j^{th} encoding in the K times of encoding, where 1 ≤ j ≤K, and K is a positive integer. The j^{th} encoding may be a 1^{st} encoding that is incorrectly decoded in a decoding order.

This is because a convolutional code has a problem of error extension. Therefore, when a group of encoded bits corresponding to a step is incorrectly decoded, there is a high probability that incorrect decoding also occurs in a subsequent step. The receiving device feeds back an index of the step, indicating that, starting from the step in the encoding window, all encoded bits corresponding to a subsequent step need to be retransmitted.

FIG. 12 is used as an example. Assuming that the receiving device incorrectly decodes a group of encoded bits corresponding to the index 2, the receiving end may feed back the index 2, to indicate that, starting from the encoding 2 corresponding to the index 2, all encoded bits corresponding to a subsequent step need to be retransmitted.

This is an application of Manner 2 in the spatially coupled code.

Optionally, a relationship between a CB and the length L of the encoding window is not limited in this embodiment of this application. For example, encoded bits included in one CB may be greater than, less than, or equal to a sum of encoded bits of K times of encoding in the encoding window.

### (2) For one CBG

In the spatially coupled code, a feedback principle for the CBG is completely similar to the feedback principle for the CBG in the foregoing hierarchical coding and modulation. The K groups of encoded bits described in hierarchical coding and modulation correspond to K times of encoding in the encoding window of the spatially coupled code, and each time of encoding corresponds to one group of encoded bits. A decoding result of each of the K times of encoding may be further fed back at a granularity of a component code of this time of encoding. Details are not described again.

### (3) For a plurality of CBGs

In the spatially coupled code, a feedback principle for the plurality of CBGs is completely similar to the feedback principle for the plurality of CBGs in the foregoing hierarchical coding and modulation. Details are not described again.

It should be noted that, because the spatially coupled code may be convolutionally encoded and decoded infinitely, to support feedback retransmission and flexible code rate adaptation, a plurality of parallel hybrid automatic repeat request (hybrid automatic repeat request, HARQ) processes are usually defined, and different HARQ processes are not related. FIG. 12 or FIG. 13 may be one of the plurality of HARQ processes.

In addition, it should be noted that different coding units shown in FIG. 12 and FIG. 13 are consecutive, but actually there is a time interval between a plurality of columns including different component codes. The time interval is usually greater than one feedback sending periodicity, so that accurate code rate adaptive control can be performed on each time of encoding based on a feedback result of previous encoding.

### 3. Product code

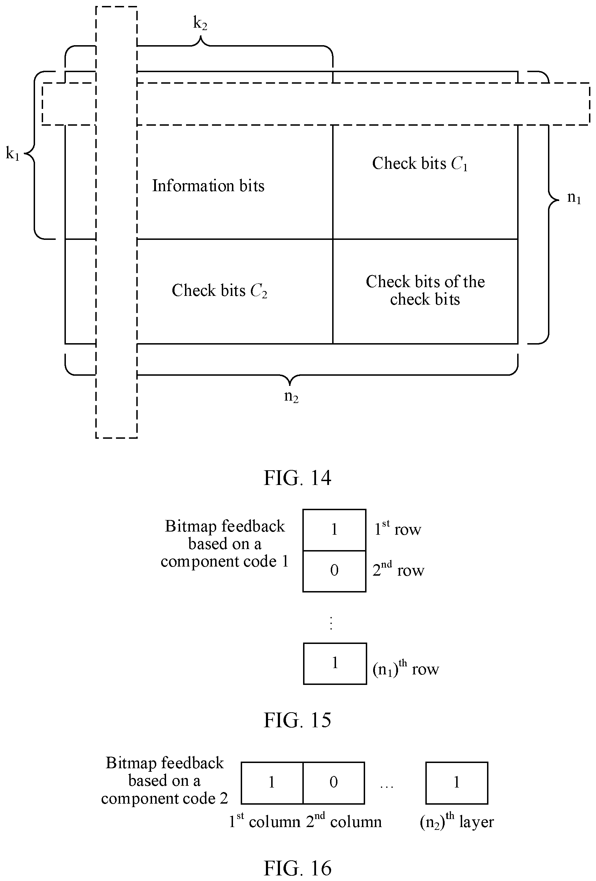

FIG. 14 is a diagram of a product code. As shown in FIG. 14, in the product code, input information bits are first arranged as a two-dimensional rectangular structure, then encoding based on a component code 1 is performed on each row to generate a check bit 1, and then encoding based on a component code 2 is performed on each column to generate a check bit 2. For more detailed descriptions of the product code having the length of *n*₁ × *n*₂, refer to the descriptions in FIG. 2. In a decoding process, iterative decoding based on soft information exchange is performed on the two component codes. For the characteristic of the product code, feedback manners indicating whether a CB or a CBG is correctly decoded are as follows.

### (1) For a single CB

(a) In an implementation, based on a one-to-one mapping relationship between the P bits included in the first information and *n*₁ rows and *n*₂ columns of the product code, values of the P bits indicate whether at least one group of encoded bits in the product code is correctly decoded separately.

In an example, the following three manners may be included.

### Manner 1

The at least one group of encoded bits includes a part or all of encoded bits of at least one row in *n*₁ rows and encoded bits of at least one column in *n*₂ columns of the product code having the length of *n*₁ × *n*₂. In this case, the first information includes a first indication part and a second indication part, the first indication part indicates whether the encoded bits of the at least one row in the *n*₁ rows are correctly decoded, and the second indication part indicates whether the encoded bits of the at least one column in the *n*₂ columns are correctly decoded.

In an example, the first information includes the first indication part and the second indication part, the first indication part includes T bits, and the second indication part includes R bits. Both T and R are positive integers greater than or equal to 1. In an example, T=*n*₁, and R=*n*₂. In this case, the first indication part indicates whether encoded bits of each of the *n*₁ rows are correctly decoded, and the second indication part indicates whether encoded bits of each of the *n*₂ columns are correctly decoded.

In Manner 1, the receiving device feeds back respective encoded bits of the component code 1 and the component code 2. Due to the coding characteristic of the product code, each information bit participates in encoding and decoding of both a row component code and a column component code. Therefore, only one component code may be selected for feedback, to further reduce feedback overheads. For example, the following Manner 2 and Manner 3 are used.

### Manner 2

The at least one group of encoded bits includes encoded bits of *n*₁ rows of the product code having the length of *n*₁ × *n*₂. In this case, the first information indicates whether the encoded bits of the *n*₁ rows are correctly decoded.

In an example, the first information includes only the first indication part in Manner 1.

FIG. 15 is a diagram of performing feedback based on a component code 1 in a product code. As shown in FIG. 15, the product code includes *n*₁ rows, the first information may include *n*₁ bits, and the *n*₁ bits are in one-to-one correspondence with the *n*₁ rows. A value of each of the *n*₁ bits is determined based on a decoding result of a corresponding row. For example, if an encoded bit in a row is incorrectly decoded, the value of the bit is 0; or if an encoded bit in the row is correctly decoded, the value of the bit is 1.

### Manner 3

The at least one group of encoded bits includes encoded bits of *n*₂ columns of the product code having the length of *n*₁ × *n*₂. In this case, the first information indicates whether the encoded bits of the *n*₂ columns are correctly decoded.

In an example, the first information may include only the second indication part in Manner 2.

FIG. 16 is a diagram of performing feedback based on a component code 2 in a product code. As shown in FIG. 16, the product code includes *n*₂ columns, the first information may include *n*₂ bits, and the *n*₂ bits are in one-to-one correspondence with the *n*₂ columns. A value of each of the *n*₂ bits is determined based on a decoding result of a corresponding column. For example, if an encoded bit in a column is incorrectly decoded, the value of the bit is 0; or if an encoded bit in the column is correctly decoded, the value of the bit is 1.

Based on a cross serial decoding procedure, when the receiving device fails to perform decoding on an i^{th} row or a j^{th} column, subsequent component code decoding may also fail. Therefore, the receiving device feeds back an index of a row location or an index of a column location at which a failure starts.

Therefore, in another implementation, the receiving device may alternatively indicate an index of a location of a row component code and/or a column component code. For example, the following implementation (b) is used.

(b) The first information indicates an index of a row and/or a column of the product code.

In an example, the K groups of encoded bits include encoded bits of at least one row in *n*₁ rows corresponding to a first component code and encoded bits of at least one column in *n*₂ columns corresponding to a second component code. In this example, the first information indicates a first row index and a first column index, the first row index corresponds to an i^{th} row in the at least one of the *n*₁ rows, the i^{th} row is a 1^{st} row with a decoding error among the at least one row in a decoding order, the first column index indicates a j^{th} column in the at least one of the *n*₂ columns, and the j^{th} column is a 1^{st} column with a decoding error among the at least one column in a decoding order.

In another example, the K groups of encoded bits include encoded bits of *n*₁ rows corresponding to a first component code in the product code, the first information indicates a first row index of the product code, the first row index corresponds to an i^{th} row of the product code, the i^{th} row is a 1^{st} row with a decoding error in the product code in a decoding order from a 1^{st} row to an (*n*₁)^{th} row or from an (*n*₁)^{th} row to a 1^{st} row, and 1 ≤i≤ *n*₁.

In still another example, the K groups of encoded bits include encoded bits corresponding to *n*₂ columns corresponding to a second component code in the product code, the first information indicates a first column index of the product code, the first column index corresponds to a j^{th} column of the product code, the j^{th} column is a 1^{st} column with a decoding error in the product code in a decoding order from a 1^{st} column to an (*n*₂)^{th} column or from an (*n*₂)^{th} column to a 1^{st} column, and 1 ≤ j ≤ *n*₂.

### (2) For one CBG

### (3) For a plurality of CBGs

In the product code, one group of encoded bits may correspond to one row of encoded bits or one group of encoded bits in the product code having the length of *n*₁ × *n*₂.

A feedback principle for a decoding status of one or more CBGs is completely similar to the feedback principle for the CBG in the foregoing hierarchical coding and modulation. Details are not described again.

The foregoing describes in detail how the receiving device feeds back the decoding status of the CB or the CBG to the sending device. The sending device receives the first information from the receiving device. In some implementations, a component code that is incorrectly decoded may be retransmitted.

This application further provides two retransmission solutions.

### 1. Independent retransmission

The sending device uses, as an independent CB or CBG for sending, a same redundancy version (redundancy version, RV) or different redundancy versions of encoded bits of the component code that is incorrectly decoded.

In an example, in hierarchical coding and modulation, if there are two or more layers for retransmission, the receiving device may perform sending after performing hierarchical constellation mapping on these layers.

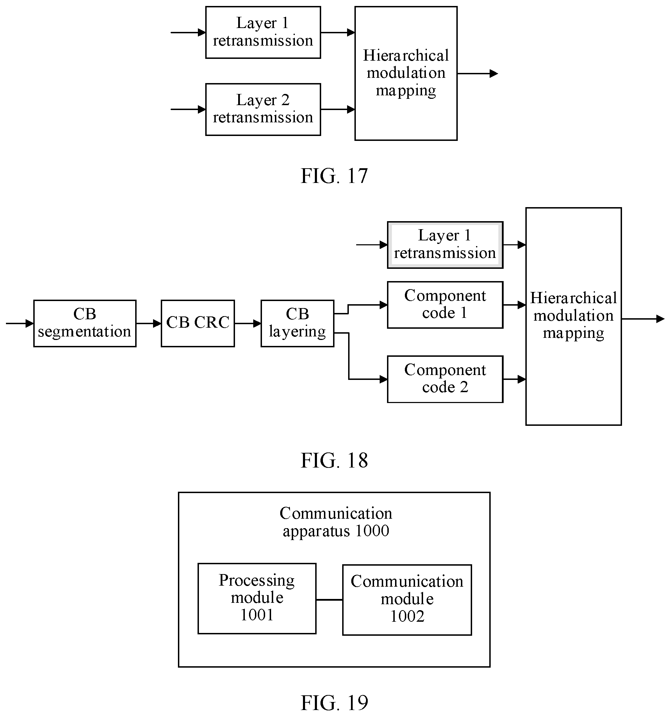

FIG. 17 is a diagram of hierarchical modulation and retransmission of a non-hybrid CB. As shown in FIG. 17, both a layer 1 and a layer 2 are used for retransmission. Because the retransmitted CB includes only retransmitted layers, the retransmitted CB may be referred to as a non-hybrid CB, that is, no newly transmitted layer participates in hierarchical modulation constellation mapping. When a CBG is retransmitted, if retransmitted data does not include any newly transmitted data or a newly transmitted CB or CBG, it is considered that the retransmission is independent retransmission.

### 2. Hybrid retransmission

FIG. 18 is a diagram of hierarchical modulation and retransmission of a hybrid CB. As shown in FIG. 18, the sending device performs transmission after performing hierarchical modulation on newly transmitted data together with a RV version that is the same as or different from encoded bits of the component code that is incorrectly decoded. Because the retransmitted CB includes both a retransmitted layer and a newly transmitted layer, the retransmitted CB may be referred to as a hybrid CB.

Based on the foregoing two retransmission manners of independent retransmission and hybrid retransmission, when a CBG is retransmitted, a non-hybrid CB or a hybrid CB may be used as an independent CB to be transmitted together with a CB of newly transmitted data.

In embodiments of this application, for a structural characteristic of a component code, targeted feedback and retransmission are performed on a component code in a codeword. In comparison with retransmission of the entire codeword, retransmission at a smaller granularity can be implemented, thereby improving spectral efficiency.

The foregoing describes in detail the feedback method provided in this application. The following describes communication apparatuses provided in this application.

As shown in FIG. 19, this application provides a communication apparatus 1000.

The communication apparatus 1000 may be a sending device, or may be an apparatus, for example, a chip, a chip system, or a circuit, that is used in the sending device and can implement a corresponding function of the sending device in the method embodiments of this application. Alternatively, the communication apparatus 1000 may be a receiving device, or may be an apparatus, for example, a chip, a chip system, or a circuit, that is used in the receiving device and can implement a corresponding function of the receiving device in the method embodiments of this application.

Optionally, the communication apparatus 1000 includes a processing module 1001. The processing module may be a processor, a processing board, a processing unit, a processing apparatus, or the like. When the communication apparatus 1000 is the sending device or the apparatus used in the sending device, the processing module 1001 is configured to process first information, to determine a status of decoding a CB/CBG by a receiving device. For a specific process, refer to detailed descriptions in the method embodiments. Details are not described herein again. When the communication apparatus 1000 is the receiving device or the apparatus used in the receiving device, the processing module 1001 is configured to generate first information based on a decoding status of a CB/CBG, to feed back the decoding status of the CB/CBG to a sending device by using the first information.

Optionally, the communication apparatus 1000 further includes a communication module 1002. The communication module may also be referred to as a transceiver module, a transceiver, a transceiver machine, a transceiver apparatus, or the like, and is configured to perform a receiving (or input) operation and/or a sending (or output) operation. For example, when the communication apparatus 1000 is the sending device or the apparatus used in the sending device, the communication module 1002 may be configured to: send a first signal, receive the first information, and the like. When the communication apparatus 1000 is the receiving device or the apparatus used in the receiving device, the communication module 1002 may be configured to: receive a first signal, send the first information, and the like.

In some embodiments, the communication module and/or the processing module may be implemented by using a virtual module. For example, the processing module may be implemented by using a software functional unit or a virtual apparatus, and the communication module may be implemented by using a software function or a virtual apparatus. Alternatively, the processing module or the communication module may be implemented by using a physical apparatus. For example, if the apparatus is implemented by using a chip/circuit (for example, an integrated circuit, a dedicated circuit, or a logic circuit), the communication module may be an input/output circuit and/or a communication interface, and performs an input operation (corresponding to the foregoing receiving operation) and an output operation (corresponding to the foregoing sending operation); and the processing module is an integrated processor, a microprocessor, or a circuit (for example, an integrated circuit or a logic circuit).

Division into modules in this application is an example, is merely logical function division, and may be other division during actual implementation. In addition, functional modules in examples of this application may be integrated into one processor, each of the modules may exist alone physically, or two or more modules may be integrated into one module. The integrated module may be implemented in a form of hardware, or may be implemented in a form of a software functional module.

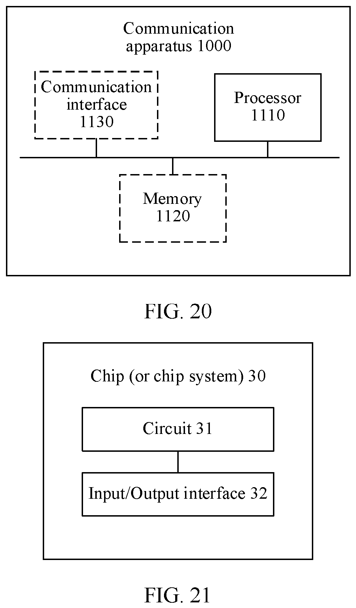

As shown in FIG. 20, this application further provides a communication apparatus 1100. The communication apparatus 1100 includes at least one processor 1110, to implement functions of the sending device or the receiving device described in the foregoing method embodiments.

Optionally, the processor 1110 is coupled to a memory. The memory may be located in the communication apparatus, or the memory may be integrated with the processor, or the memory may be located outside the communication apparatus. The communication apparatus 1100 may further include at least one memory 1120. The memory 1120 stores a computer program, instructions, data, or the like that is necessary for implementing any one of the foregoing method embodiments. The processor 1110 may execute the computer program, the instructions, the data, or the like stored in the memory 1120, to complete the feedback method in any one of the foregoing embodiments.

Optionally, the communication apparatus 1100 may further include a communication interface 1130, and the communication apparatus 1100 may exchange information with another device through the communication interface 1130. For example, the communication interface 1130 may be a transceiver, a circuit, a bus, a module, a pin, or another type of interface.

The coupling in this application may be an indirect coupling or a communication connection between apparatuses, units, or modules in an electrical form, a mechanical form, or another form, and is used for information exchange between the apparatuses, the units, or the modules. The processor 1110 may operate cooperatively with the memory 1120 and the communication interface 1130. A specific connection medium between the processor 1110, the memory 1120, and the communication interface 1130 is not limited in this application.

As shown in FIG. 21, this application further provides a chip (or a chip system). The chip (or the chip system) 30 may include a circuit 31 and an input/output interface 32. The circuit 31 may be a logic circuit, an integrated circuit, or the like. The input/output interface 32 may alternatively be an input/output circuit or an interface circuit, and may input information (or referred to as receiving information) and output information (or referred to as sending information). Optionally, the chip system may include a chip, or may include a chip and another discrete device. The chip 30 may be configured to perform the method performed by the sending device or the receiving device in embodiments of this application.

In addition, this application further provides a computer-readable storage medium. The computer-readable storage medium stores computer instructions. When the computer instructions are run on a computer, operations and/or processing performed by the sending device or the receiving device in the method embodiments of this application are/is performed.

This application further provides a computer program product. The computer program product includes computer program code or instructions. When the computer program code or the instructions are run on a computer, operations and/or processing performed by the sending device or the receiving device in the method embodiments of this application are/is performed.

In addition, this application further provides a chip. The chip includes a processor. A memory configured to store a computer program is disposed independent of the chip. The processor is configured to execute the computer program stored in the memory, to cause operations and/or processing performed by the sending device or the receiving device in any method embodiment to be performed.

Further, the chip may include a communication interface. The communication interface may be an input/output interface, an interface circuit, or the like. Further, the chip may include the memory.

This application provides a communication system, including the sending device and the receiving device in any one of the foregoing method embodiments.

In embodiments of this application, "a plurality of" includes two or more.

In addition, functional units in embodiments of this application may be integrated into one processing unit, or each of the units may exist alone physically, or two or more units may be integrated into one unit.

In this application, the processor may be a general-purpose processor, a digital signal processor, an application-specific integrated circuit, a field programmable gate array or another programmable logic device, a discrete gate or transistor logic device, or a discrete hardware component, and may implement or perform the methods, steps, and logical block diagrams disclosed in this application. The general-purpose processor may be a microprocessor, any conventional processor, or the like. The steps of the methods disclosed with reference to this application may be directly implemented by a hardware processor, or may be implemented by a combination of hardware and a software module in a processor.

The memory may be a non-volatile memory, for example, a hard disk drive (hard disk drive, HDD) or a solid-state drive (solid-state drive, SSD), or may be a volatile memory (volatile memory), for example, a random access memory (random access memory, RAM). The memory is any other medium that can carry or store expected program code in a form of an instruction or a data structure and that can be accessed by a computer, but is not limited thereto. Alternatively, the memory in this application may be a circuit or any other apparatus that can implement a storage function, and is configured to store program instructions and/or data.

All or some of the technical solutions provided in this application may be implemented by software, hardware, firmware, or any combination thereof. When the software is for implementation, all or some of the technical solutions may be implemented in a form of a computer program product. The computer program product includes one or more computer instructions. When the computer program instructions are loaded and executed on a computer, all or some of the procedures or functions in this application are generated. The computer may be a general-purpose computer, a dedicated computer, a computer network, a terminal device, an access network device, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, like a server or a data center, integrating one or more usable media. The usable medium may be a magnetic medium (for example, a floppy disk, a hard disk drive, or a magnetic tape), an optical medium (for example, a digital video disc (digital video disc, DVD)), a semiconductor medium, or the like.

In this application, on the premise that there is no logic contradiction, the examples can be referenced from each other. For example, methods and/or terms in the method embodiments can be referenced from each other, functions and/or terms in the apparatus embodiments can be referenced from each other, and functions and/or terms in the apparatus examples and the method examples can be referenced from each other.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in another manner. For example, the foregoing described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate parts may or may not be physically separate, and parts displayed as units may or may not be physical units, that is, may be located in one position, or may be distributed on a plurality of network units. Some or all of the units may be selected based on actual requirements to achieve the objectives of the solutions of embodiments.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A feedback method, comprising:
sending a first signal, wherein the first signal is carried in a first CB; and
receiving first information, wherein the first information indicates whether at least one group of encoded bits corresponding to the first CB is correctly decoded separately.

2. A feedback method, comprising:
receiving a first signal, wherein the first signal is carried in a first CB; and
sending first information, wherein the first information indicates whether at least one group of encoded bits corresponding to the first CB is correctly decoded separately.

3. The method according to claim 1 or 2, wherein the at least one group of encoded bits is K groups of encoded bits, the first information comprises P bits, the P bits indicate whether the K groups of encoded bits are correctly decoded separately, Q bits that are in the P bits and indicate whether a first group of encoded bits is correctly decoded are determined based on a decoding result of the first group of encoded bits, Q is less than P, Q is a positive integer greater than or equal to 1, K is a positive integer greater than 1, and P is a positive integer.

4. The method according to claim 3, wherein P=K, and each of the K bits indicates whether one of the K groups of encoded bits is correctly decoded.

5. The method according to claim 3 or 4, wherein the K groups of encoded bits are in one-to-one correspondence with K component codes, each of the K groups of encoded bits is obtained based on a corresponding component code, the K component codes are in one-to-one correspondence with K layers of a hierarchical modulation constellation diagram, and any two of the K component codes differ in one or more of the following parameters:
a code pattern, a code rate, or a corresponding constellation point location in the hierarchical modulation constellation diagram.

6. The method according to claim 3 or 4, wherein the K groups of encoded bits are in one-to-one correspondence with K local codes of a globally coupled code, the globally coupled code further comprises a global code, the global code is an outer code, and the K local codes are inner codes.

7. The method according to claim 3 or 4, wherein the K groups of encoded bits are in one-to-one correspondence with K steps in an encoding window of a spatially coupled code, an i^{th} group of encoded bits in the K groups of encoded bits is obtained based on at least one component code corresponding to an i^{th} step in the K steps, the Q bits correspond to a first index, and the Q bits indicate whether the first group of encoded bits corresponding to a first step indicated by the first index is correctly decoded.

8. The method according to claim 7, wherein the first group of encoded bits corresponds to r component codes, and that the Q bits indicate whether the first group of encoded bits corresponding to the first step indicated by the first index is correctly decoded comprises:
q bits in the Q bits indicate whether the r component codes are correctly decoded separately, wherein Q is greater than or equal to q, r is greater than or equal to 1, and both q and r are positive integers.

9. The method according to claim 1 or 2, wherein the at least one group of encoded bits comprises encoded bits of at least one row in *n*₁ rows and encoded bits of at least one column in *n*₂ columns of a product code having a length of *n*₁ × *n*₂, the first information comprises a first indication part and a second indication part, the first indication part indicates whether the encoded bits of the at least one row in the *n*₁ rows are correctly decoded separately, and the second indication part indicates whether the encoded bits of the at least one column in the *n*₂ columns are correctly decoded separately;
or
the at least one group of encoded bits comprises encoded bits of *n*₁ rows of a product code having a length of *n*₁ × *n*₂, and the first information indicates whether the encoded bits of the *n*₁ rows are correctly decoded;
or
the at least one group of encoded bits comprises encoded bits of *n*₂ columns of a product code having a length of *n*₁ × *n*₂, and the first information indicates whether the encoded bits of the *n*₂ columns are correctly decoded.

10. The method according to claim 9, wherein the first information comprises the first indication part and the second indication part, the first indication part comprises T bits, the second indication part comprises R bits, the T bits indicate whether the encoded bits of the at least one row in the *n*₁ rows are correctly decoded separately, the R bits indicate whether the encoded bits of the at least one column in the *n*₂ columns are correctly decoded separately, and both T and R are positive integers greater than or equal to 1.

11. The method according to claim 10, wherein T=*n*₁, R=*n*₂, the first indication part indicates whether encoded bits of each of the *n*₁ rows are correctly decoded, and the second indication part indicates whether encoded bits of each of the *n*₂ columns are correctly decoded.

12. The method according to claim 1 or 2, wherein the at least one group of encoded bits comprises K groups of encoded bits, and K is an integer greater than 1; and
the first information indicates an index of a j^{th} group in the K groups, wherein the j^{th} group is a 1^{st} group that is incorrectly decoded in a decoding order, and 1 ≤j≤K.

13. The method according to claim 12, wherein the K groups of encoded bits are in one-to-one correspondence with K component codes, each of the K groups of encoded bits is obtained based on a corresponding component code, the first information indicates an index of a first component code in the K component codes, the K component codes correspond to K different layers of a hierarchical modulation constellation diagram, encoded bits of the first component code correspond to a j^{th} layer of the hierarchical modulation constellation diagram, the j^{th} layer is a 1^{st} layer that is incorrectly decoded in the K layers of the hierarchical modulation constellation diagram in a decoding order in descending order of decoding capabilities, 1 ≤j≤K, and K is a quantity of layers of the hierarchical modulation constellation diagram.

14. The method according to claim 12, wherein the K groups of encoded bits are in one-to-one correspondence with K local codes of a globally coupled code, each of the K groups of encoded bits is obtained based on a corresponding local code, the first information indicates an index of a first local code in the K local codes, and the first local code is a 1^{st} local code that is incorrectly decoded in the K local codes in a decoding order.

15. The method according to claim 12, wherein the K groups of encoded bits comprise K groups of encoded bits corresponding to K times of encoding in an encoding window of a spatially coupled code, each of the K groups of encoded bits corresponds to one of the K times of encoding, the first information indicates an index of a j^{th} encoding in the K times of encoding, the j^{th} encoding is a 1^{st} encoding for which decoding is incorrectly performed in a decoding order, 1 ≤ j ≤K, and K is a positive integer.

16. The method according to claim 12, wherein the K groups of encoded bits comprise encoded bits of at least one row in *n*₁ rows corresponding to a first component code and encoded bits of at least one column in *n*₂ columns corresponding to a second component code in a product code having a length of *n*₁ × *n*₂, the first information indicates a first row index and a first column index of the product code, the first row index corresponds to an i^{th} row in the at least one of the *n*₁ rows, the i^{th} row is a 1^{st} row with a decoding error among the at least one row in a decoding order, the first column index corresponds to a j^{th} column in the at least one of the *n*₂ columns, and the j^{th} column is a 1^{st} column with a decoding error among the at least one column in a decoding order;
the K groups of encoded bits comprise encoded bits of *n*₁ rows corresponding to a first component code in a product code having a length of *n*₁ × *n*₂, the first information indicates a first row index of the product code, the first row index corresponds to an i^{th} row of the product code, the i^{th} row is a 1^{st} row with a decoding error in a decoding order, and 1 ≤i≤ *n*₁;
or
the K groups of encoded bits comprise encoded bits corresponding to *n*₂ columns corresponding to a second component code in a product code having a length of *n*₁ × *n*₂, the first information indicates a first column index of the product code, the first column index corresponds to a j^{th} column of the product code, the j^{th} column is a 1^{st} column with a decoding error in a decoding order, and 1 ≤ j ≤ *n*₂.

17. The method according to any one of claims 1 and 3 to 16, wherein the method further comprises:
sending a second CB, wherein the second CB is a first-type CB and/or a second-type CB, wherein
the first-type CB comprises an encoded bit that is incorrectly decoded, and the second-type CB comprises the encoded bit that is incorrectly decoded and newly transmitted data.

18. A feedback method, comprising:
sending a first signal, wherein the first signal is carried in a first CBG; and
receiving first information, wherein the first information indicates whether at least two groups of encoded bits corresponding to the first CBG are correctly decoded separately, wherein
the first information comprises a first indication part, the first indication part indicates whether a first group of encoded bits in the at least two groups of encoded bits is correctly decoded, and the first indication part is determined based on a decoding result of the first group of encoded bits comprised in at least two CBs in the first CBG.

19. The method according to claim 18, wherein the at least two groups of encoded bits comprise any one of the following:
the at least two groups of encoded bits are in one-to-one correspondence with at least two component codes, and the at least two component codes are in one-to-one correspondence with at least two layers of a hierarchical modulation constellation diagram;
the at least two groups of encoded bits are in one-to-one correspondence with at least two local codes of a globally coupled code;
the at least two groups of encoded bits are in one-to-one correspondence with at least two groups of encoded bits corresponding to at least two staircase steps in an encoding window of a spatially coupled code;
the at least two groups of encoded bits comprise encoded bits of at least one row in *n*₁ rows and encoded bits of at least one column in *n*₂ columns of a product code having a length of *n*₁ × *n*₂;
the at least two groups of encoded bits comprise encoded bits of at least two rows in *n*₁ rows of a product code having a length of *n*₁ × *n*₂; or
the at least two groups of encoded bits comprise encoded bits of at least two columns in *n*₂ columns of a product code having a length of *n*₁ × *n*₂.

20. The method according to claim 18 or 19, wherein that the first indication part is determined based on the decoding result of the first group of encoded bits comprised in the at least two CBs in the first CBG comprises:
if not all the first group of encoded bits comprised in the at least two CBs in the first CBG are correctly decoded, the first indication part indicates that the first group of encoded bits is incorrectly decoded.

21. The method according to any one of claims 18 to 20, wherein the method further comprises:
sending a second CBG comprising a first-type CB and/or a second-type CB, wherein
the first-type CB comprises a first group of encoded bits that is incorrectly decoded, and the second-type CB comprises the first group of encoded bits that is incorrectly decoded and newly transmitted data.

22. The method according to claim 21, wherein the first group of encoded bits comprised in the first-type CB or the second-type CB and the first group of encoded bits in the first CBG are a same redundancy version RV or different redundancy versions.

23. A feedback method, comprising:
sending a first signal, wherein the first signal is carried in a first TB, the first TB comprises K CBGs, and K is an integer greater than or equal to 2; and
receiving first information, wherein the first information indicates whether at least two groups of encoded bits corresponding to each of the K CBGs are correctly decoded.

24. The method according to claim 23, wherein the first information comprises K bit groups, the K bit groups are in one-to-one correspondence with the K CBGs, each of the K bit groups indicates whether at least two groups of encoded bits corresponding to a corresponding CBG are correctly decoded, and a first bit group in the K bit groups is determined based on decoding results of at least two groups of encoded bits comprised in at least two CBs in a corresponding first CBG.

25. The method according to claim 24, wherein each of the K bit groups comprises m bits, and m is equal to a quantity of encoded bit groups comprised in one CB.

26. The method according to claim 23, wherein the first information comprises a first indication part and a second indication part, the first indication part indicates whether the K CBGs are correctly decoded separately, the second indication part comprises Q bit groups, Q is a quantity of CBGs that are incorrectly decoded in the K CBGs, and a first bit group in the Q bit groups indicates whether at least two groups of encoded bits corresponding to a first CBG that is incorrectly decoded are correctly decoded separately.

27. The method according to claim 26, wherein the first indication part comprises K bits, the K bits are in one-to-one correspondence with the K CBGs, each of the Q bit groups comprises m bits, each of the Q bit groups indicates whether at least two groups of encoded bits corresponding to a corresponding CBG that is incorrectly decoded are correctly decoded, the first bit group in the Q bit groups is determined based on decoding results of the at least two groups of encoded bits comprised in at least two CBs in the corresponding first CBG, and m is equal to a quantity of encoded bit groups comprised in one CB.

28. The method according to any one of claims 23 to 27, wherein the at least two groups of encoded bits comprise any one of the following:
the at least two groups of encoded bits are in one-to-one correspondence with at least two component codes, and the at least two component codes are in one-to-one correspondence with at least two layers of a hierarchical modulation constellation diagram;
the at least two groups of encoded bits are in one-to-one correspondence with at least two local codes of a globally coupled code;
the at least two groups of encoded bits are in one-to-one correspondence with at least two groups of encoded bits corresponding to at least two staircase steps in an encoding window of a spatially coupled code;
the at least two groups of encoded bits comprise encoded bits of at least one row in *n*₁ rows and encoded bits of at least one column in *n*₂ columns of a product code having a length of *n*₁ × *n*₂;
or
the at least two groups of encoded bits comprise encoded bits of at least two rows in *n*₁ rows of a product code having a length of *n*₁ × *n*₂; or
the at least two groups of encoded bits comprise encoded bits of at least two columns in *n*₂ columns of a product code having a length of *n*₁ × *n*₂.

29. A communication apparatus, comprising a module or a unit configured to perform the method according to any one of claims 1 to 28.

30. A communication apparatus, comprising a communication interface and a circuit, wherein the communication interface is configured to: obtain information needed for performing the method according to any one of claims 1 to 28, and send the information to the circuit, and the circuit is configured to perform the method according to any one of claims 1 to 28 based on the received information.

31. A communication apparatus, comprising a processor, wherein the processor is coupled to a memory, and the processor is configured to execute a computer program or instructions stored in the memory, to cause the communication apparatus to perform the method according to any one of claims 1 to 28.

32. A computer-readable storage medium, wherein the computer-readable storage medium stores computer instructions, and when the computer instructions are run on a computer, the method according to any one of claims 1 to 28 is implemented.
